# EUROPEAN PATENT SPECIFICATION

(11) **EP 3 932 598 B1**
(45) Date of publication and mention of the grant of the patent: **06.09.2023**
(21) Application number: 20183362.1
(22) Date of filing: 01.07.2020
(51) Int. Cl.: B23B 51/04, B23B 27/14

(54) **A METAL CUTTING DRILL INSERT, AND A METAL CUTTING DRILL TOOL**
METALLSCHNEIDBOHREINSATZ UND EIN METALLSCHNEIDBOHRWERKZEUG
PLAQUETTE DE FORAGE POUR LA DÉCOUPE DES MÉTAUX ET OUTIL DE FORAGE POUR LA DÉCOUPE DES MÉTAUX

(43) Date of publication of application: 05.01.2022
(73) Proprietor: AB Sandvik Coromant, 811 81 Sandviken (SE)
(72) Inventor: SUNNVIUS, Ulrik, 811 81 SANDVIKEN (SE)
(74) Representative: Sandvik

(56) References cited:
- EP-A1- 3 088 111
- WO-A1-02/20201
- DE-A1- 4 309 897
- US-A1- 2002 154 958

## Description

### TECHNICAL FIELD

The present invention relates to a metal cutting drill insert according to the preamble of claim 1.

The present invention further relates to a metal cutting drill tool having such a metal cutting drill insert. Such a metal cutting drill insert and such a metal cutting drill tool are known from EP 3 088 111 A1.

### BACKGROUND

In modern subtractive manufacturing drilling is an important operation and especially drilling in metal proves to be a demanding operation.

In metal drilling a drill tool with replaceable metal cutting inserts is often used, especially in CNC operations. A modern drill tool of the previously discussed type often comprises a center insert for drilling the center region of the drilled hole, and a peripheral insert for removing material in the peripheral region of the drilled hole. Due to different cutting geometries the center insert and the peripheral insert often employs different geometries. It is advantageous to cut continuous chips of a predetermined length from the drilled material. Chip control is of utmost importance in modern CNC metal drilling, and especially chip evacuation has a large impact on the process security and reliability, and this is important since it is desired that a CNC operation may be performed automatically without monitoring and surveillance. Chip control is also important for the surface finish of the drilled hole, and also impacts the drill speed.

In order to enhance chip control a modern metal cutting insert is often provided a chip breaker. This chip breaker employs different geometries for controlling the forming and direction of chips during the drilling operation.

A design disclosed in EP2979793A1 provides a cutting edge that is provided an angle that causes the edge to slope against the bottom surface of the insert. Furthermore this design employs a chip breaker groove with a varying depth relative the edge, or relative the support surface on the bottom face of the insert. This design also provides varying width of the chip groove along the cutting edge. This design may have problems with reduced strength of the cutting edge due to the varying geometry of the cutting edge.

However, it still remains a need to further improve the chip breaker groove.

It is therefore an object of the present invention to present a metal cutting drill insert with a chip breaker groove that allows an improved chip control.

### SUMMARY

According to the present invention, the above mentioned object is achieved by means of a metal cutting drill insert having the features defined in claim 1.

The metal cutting drill insert according to the present invention comprises opposing top surface and bottom surface with a symmetry axis of the cutting drill insert extending there between, and a peripheral side surface extends between said top surface and said bottom surface, wherein the top surface comprises a rake face and the side surface comprises a clearance face. The metal cutting drill insert further comprises at least one cutting edge formed at an intersection of a rake face of the top surface and an adjoining clearance face of the side surface, and at least one chip breaker is formed in the rake face adjacent to and along the cutting edge. The metal cutting drill insert is characterized in that the at least one chip breaker comprises a first chip groove with a constant width and constant depth relative the cutting edge, a second chip groove with an increasing width and a constant depth relative the cutting edge, and a transitional chip groove which connects the first chip groove to the second chip groove.

The increasing width of the second chip groove has a beneficial impact on the steering of the chip and the formation of the chip. The increasing width of the second chip groove is particularly important in long chipping materials such as for example low carbon steel and stainless steel.

According to one embodiment, the constant depth of the first chip groove is equal to the constant depth of the second chip groove. This way the strength of the insert is maintained along the edge.

According to one embodiment, the cutting edge is a straight edge in a side view facing the clearance face and the cutting edge is a straight edge in a top view facing the rake face.

According to the present invention, the second chip groove in a first end adjacent to the transitional groove has a first width w21 and in a second end has a second width w22, wherein the second width is larger than the first width.

According to one embodiment, the at least one chip breaker comprises a land with a constant width wL that extends along the cutting edge.

According to one embodiment, the land has a constant angle relative the bottom surface of the metal cutting drill insert. This allows precise measurements of the angle during manufacturing, and also enables efficient manufacturing. According to one embodiment, the land has a constant angle relative the bottom of the metal cutting insert at the straight parts of the cutting edge, whereas the land may have a varying angle at the corner sections of the cutting edge. According to one embodiment, the land has constant angle relative the bottom surface of the metal cutting drill insert along the cutting edge at the first chip groove and the second chip groove.

According to one embodiment, the transitional groove is an extension of the first chip groove, or the transitional groove is an extension of the second chip groove. According to one embodiment, the length of the second chip groove l2 is 0.5·l1 ≤ I2 ≤ 1.5·l1, where l1 is the length of the first chip groove.

According to one embodiment, the length of the second chip groove I2 is 0.8·l1 ≤ I2 ≤ 1.2·l1, where l1 is the length of the first chip groove.

According to one embodiment, the second chip groove is configured to be a radially peripheral groove upon mounting of the metal cutting drill insert in a drill tool.

Within this application the term chip groove should be interpreted as a breaker groove.

The present invention also relates to a metal cutting drill tool according to claim 10, comprising an elongated drill body having a boring shaft and a mount shank. The metal cutting drill tool further comprises at least one drill insert according to embodiments described herein mounted at an end of the boring shaft.

Further advantages of the present invention will appear from the description following below.

### LIST OF DRAWINGS

Embodiments of the invention will now be described in detail with regard to the annexed drawings, in which:
Fig. 1 is a perspective view of a mesh model illustrating a metal cutting drill insert according to an embodiment of the present invention,
Fig. 2 is a top view of a rake face of a mesh model that illustrates a metal cutting drill insert according to an embodiment of the present invention,
Fig. 3 is a side view of a clearance face of a mesh model that illustrates a metal cutting drill insert according to an embodiment of the present invention,
Fig. 4 illustrates cross sectional views along lines A-A', B-B', and C-C' of Fig. 2, and
Fig. 5 illustrates a drill tool according to an embodiment of the present invention.

### DETAILED DESCRIPTION OF EMBODIMENTS

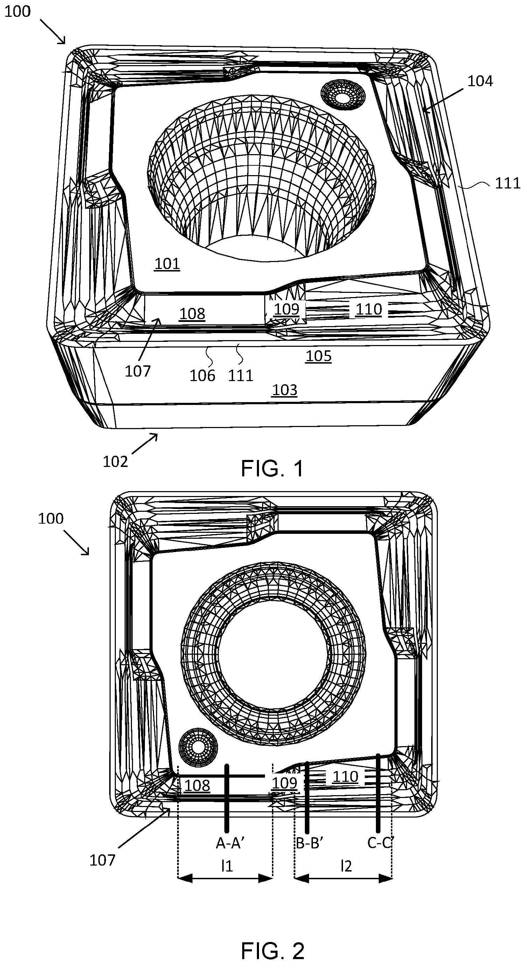

Reference is made to Fig. 1 and Fig. 2 which illustrates an embodiment of the inventive metal cutting drill insert, generally designated 100, as mesh models.

The metal cutting drill insert 100 for a drill tool 500, comprising opposing top surface 101 and bottom surface 102 with a symmetry axis of the cutting drill insert extending there between, and a peripheral side surface 103 extends between said top surface and said bottom surface. The top surface comprises a rake face 104 and the side surface 103 comprises a clearance face 105, and at least one cutting edge 106 is formed at an intersection of the rake face 104 of the top surface 101 and an adjoining clearance face 105 of the side surface 103. Furthermore, at least one chip breaker 107 is formed in the rake face 104 adjacent to and along the cutting edge 106. The metal cutting drill insert is characterized in that the at least one chip breaker 107 comprises a first chip groove 108 with a constant width w1 and constant depth d1 relative the cutting edge 106. The at least one chip breaker further comprises a second chip groove 110 with an increasing width, and a constant depth d2 relative the cutting edge 106, and a transitional chip groove 109 which connects the first chip groove 108 to the second chip groove 110.

The present inventor has realized that by having constant depth in the chip breaker, local points of weakness along the cutting edge may be avoided.

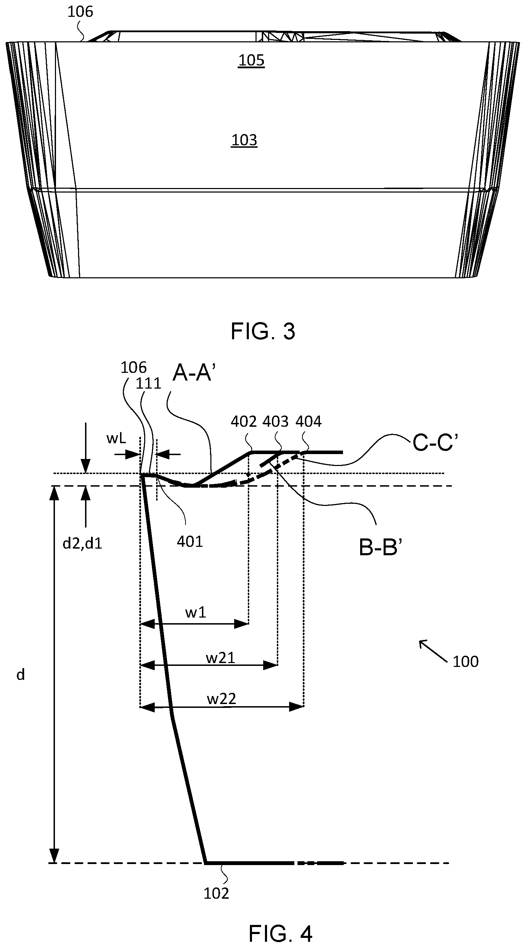

Fig. 3 shows that the cutting edge 106 is a straight edge in a side view facing the clearance face 105 and the cutting edge 106 is a straight edge in a top view facing the rake face 104 as seen in Fig. 2.

In Fig. 4 the cross sectional profiles along line A-A', B-B', and C-C' in Fig. 2 are shown. The first cross section A-A' intersects the first chip groove and is illustrated as line A-A' in Fig. 4. The second cross section B-B' intersects the second chip groove in a first end and is illustrated as line B-B' in Fig. 4. The third cross section C-C' intersects the second chip groove in a second end and is illustrated as line C-C' in Fig. 4.

In this figure it is shown that the geometry of the cutting edge 106 is constant in all cross sectional profiles. This contributes to increased strength compared to a cutting edge with varying geometries along the cutting edge. Fig. 4 further shows that the chip breaker also comprises a land with a constant width wL that extends along the cutting edge. This constant land width contributes to better chip formation and control.

In Fig. 4 it is also shown that the land 111 has a constant angle relative the bottom surface 102 of the metal cutting drill insert 100. This allows ease of manufacturing and enables precise measurements of the angle due to the non-varying angle around the insert.

In one embodiment, the land has a constant angle relative the bottom of the metal cutting insert at the straight parts of the cutting edge, whereas the land may have a varying angle at the corner sections of the cutting edge.

In one embodiment, the land has constant angle relative the bottom surface 102 of the metal cutting drill insert 100 along the cutting edge at the first chip groove 108 and the second chip groove 110.

Fig. 4 also discloses that the distance from the bottom of the first chip groove, and the second chip groove, to the bottom surface is constant.

Fig. 4 discloses that in the present embodiment, the constant depth d1 of the first chip groove 108 is equal to the constant depth d2 of the second chip groove 110.

Furthermore in Fig. 4, the second chip groove 110 in a first end adjacent to the transitional groove 109 has a first width w21 and in a second end has a second width w22, wherein the second width w22 is larger than the first width w21. This contributes to improved chip control. The widths of the chip grooves are calculated as the distances from the edge 106 to the lateral end of the groove, which for line A-A' is a point 402, for line B-B' a point 403, and for line C-C' point 404.

In an alternative embodiment, the transitional groove 109 is an extension of the first chip groove 108, or the transitional chip groove 109 is an extension of the second chip groove 110. This way the first chip groove directly joins the second chip groove.

Now with reference made to Fig. 2 again, the length of the second chip groove 110 l2 is 0.5·l1 ≤ I2 ≤ 1.5·l1, where l1 is the length of the first chip groove 108.

Preferably, the length of the second chip groove 110 I2 is 0.8·l1 ≤ I2 ≤ 1.2·l1, where l1 is the length of the first chip groove 108.

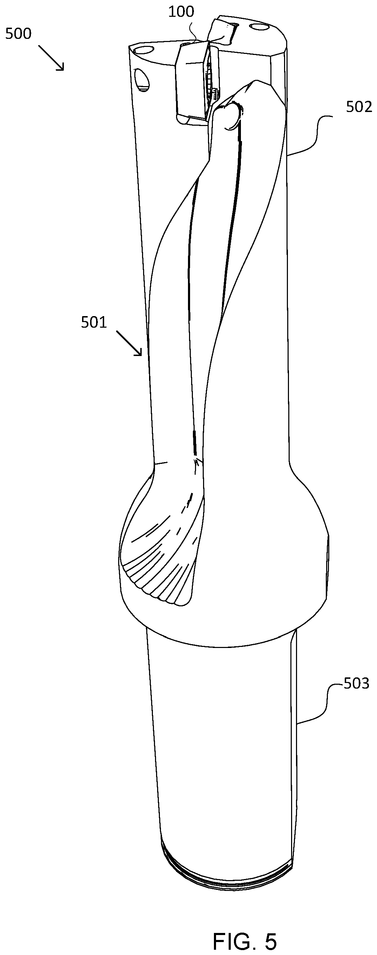

The second chip groove is configured to be a radially peripheral groove upon mounting of the metal cutting drill insert in a drill tool 500 as can be seen in Fig. 5.

Now with reference made to Fig. 5, a metal cutting drill tool, generally designated 500, will be presented. The metal cutting drill tool comprises an elongated drill body 501 having a boring shaft 502 and a mount shank 503; and *characterized in* that it further comprises at least one drill insert 100 according to any one of the preceding claims mounted at an end of the boring shaft 502. Preferably the insert is mounted using a screw configured to press the bottom surface of the insert against a surface adapted thereto on the boring shaft.

## Claims

1. A metal cutting drill insert (100) for a drill tool (500), comprising:
opposing top surface (101) and bottom surface (102) with a symmetry axis of the cutting drill insert extending there between, and a peripheral side surface (103) extends between said top surface and said bottom surface, wherein the top surface comprises a rake face (104) and the side surface (103) comprises a clearance face (105);
at least one cutting edge (106) is formed at an intersection of the rake face (104) of the top surface (101) and an adjoining clearance face (105) of the side surface (103),
at least one chip breaker (107) is formed in the rake face (104) adjacent to and along the cutting edge (106);
***characterized in* that**
the at least one chip breaker (107) comprises:
a first chip groove (108) with a constant width (w1) and constant depth (d1) relative the cutting edge (106);
a second chip groove (110) with an increasing width, and a constant depth (d2) relative the cutting edge (106);
a transitional chip groove (109) which connects the first chip groove (108) to the second chip groove (110);
wherein the second groove (110) in a first end adjacent to the transitional groove (109) has a first width w21 and in a second end has a second width w22, wherein the second width w22 is larger than the first width w21.

2. The metal cutting drill insert according to claim 1, ***characterized in* that** the constant depth (d1) of the first chip groove (108) is equal to the constant depth d2 of the second chip groove (110).

3. The metal cutting drill insert according to claim 2, ***characterized in* that** the cutting edge (106) is a straight edge in a side view facing the clearance face (105) and the cutting edge (106) is a straight edge in a top view facing the rake face (104).

4. The metal cutting drill insert according to any one of the preceding claims, ***characterized in* that** the at least one chip breaker (107) comprises a land (111) with a constant width wL that extends along the cutting edge.

5. The metal cutting drill insert according to claim 4, ***characterized in* that** the land (111) has a constant angle relative the bottom surface (102) of the metal cutting drill insert (100).

6. The metal cutting drill insert according to any one of the preceding claims, ***characterized in* that** the transitional chip groove (109) is an extension of the first chip groove (108), or the transitional chip groove (109) is an extension of the second chip groove (110).

7. The metal cutting drill insert according to any one of the preceding claims, ***characterized in* that** the length of the second chip groove (110) I2 is 0.5-11 ≤ I2 ≤ 1.5·l1, where l1 is the length of the first chip groove (108).

8. The metal cutting drill insert according to any one of the preceding claims, ***characterized in* that** the length of the second chip groove (110) I2 is 0.8.11 ≤ I2 ≤ 1.2·l1, where l1 is the length of the first chip groove (108).

9. The metal cutting drill insert according to any one of the preceding claims, ***characterized in* that** the second chip groove is configured to be a radially peripheral groove upon mounting of the metal cutting drill insert in a drill tool (500).

10. A metal cutting drill tool (500) comprising:
an elongated drill body (501) having a boring shaft (502) and a mount shank (503); and
***characterized in* that** it further comprises at least one drill insert (100) according to any one of the preceding claims mounted at an end of the boring shaft (502).

## Patentansprüche

1. Metallschneidender Bohreinsatz (100) für ein Bohrwerkzeug (500), umfassend:
eine obere Fläche (101) und eine gegenüberliegende untere Fläche (102), wobei sich eine Symmetrieachse des schneidenden Bohreinsatzes dazwischen erstreckt, und eine periphere Seitenfläche (103), die sich zwischen der oberen Fläche und der unteren Fläche erstreckt, wobei die obere Fläche eine Spanfläche (104) und die Seitenfläche (103) eine Freifläche (105) aufweist,
wobei an einem Schnittpunkt der Spanfläche (104) der oberen Fläche (101) und einer angrenzenden Freifläche (105) der Seitenfläche (103) wenigstens eine Schneidkante (106) ausgebildet ist,
wobei in der Spanfläche (104) benachbart zu und entlang der Schneidkante (106) wenigstens ein Spanbrecher (107) ausgebildet ist;
***dadurch gekennzeichnet,* dass**
der wenigstens eine Spanbrecher (107) folgendes aufweist:
eine erste Spanleitnut (108) mit einer konstanten Breite (w1) und einer konstanten Tiefe (d1) bezogen auf die Schneidkante (106);
eine zweite Spanleitnut (110) mit zunehmender Breite und konstanter Tiefe (d2) bezogen auf die Schneidkante (106);
eine Übergangsspannut (109), die die erste Spannut (108) und die zweite Spannut (110) verbindet;
wobei die zweite Nut (110) an einem ersten Ende, das an die Übergangsnut (109) angrenzt, eine erste Breite w21 und an einem zweiten Ende eine zweite Breite w22 aufweist, wobei die zweite Breite w22 größer als die erste Breite w21 ist.

2. Metallschneidender Bohreinsatz nach Anspruch 1, ***dadurch gekennzeichnet,* dass** die konstante Tiefe (d1) der ersten Spannut (108) gleich der konstanten Tiefe d2 der zweiten Spannut (110) ist.

3. Metallschneidender Bohreinsatz nach Anspruch 2, ***dadurch gekennzeichnet,* dass** die Schneidkante (106) in einer Seitenansicht, die der Freifläche (105) zugewandt ist, eine gerade Kante ist und die Schneidkante (106) in einer Draufsicht, die der Spanfläche (104) zugewandt ist, eine gerade Kante ist.

4. Metallschneidender Bohreinsatz nach einem der vorhergehenden Ansprüche, ***dadurch gekennzeichnet,* dass** der wenigstens eine Spanbrecher (107) eine Flanke (111) mit einer konstanten Breite wL, die sich entlang der Schneidkante erstreckt, aufweist.

5. Metallschneidender Bohreinsatz nach Anspruch 4, ***dadurch gekennzeichnet,* dass** die Flanke (111) bezogen auf die Bodenfläche (102) des metallschneidenden Bohreinsatzes (100) einen konstanten Winkel aufweist.

6. Metallschneidender Bohreinsatz nach einem der vorhergehenden Ansprüche, ***dadurch gekennzeichnet,* dass** die Übergangsspannut (109) eine Verlängerung der ersten Spannut (108) ist, oder dass die Übergangsspannut (109) eine Verlängerung der zweiten Spannut (110) ist.

7. Metallschneidender Bohreinsatz nach einem der vorhergehenden Ansprüche, ***dadurch gekennzeichnet,* dass** die Länge der zweiten Spanleitnut (110) l2 0,5 l1 ≤ l2 ≤ 1,5 l1 beträgt, wobei l1 die Länge der ersten Spanleitnut (108) ist.

8. Metallschneidender Bohreinsatz nach einem der vorhergehenden Ansprüche, ***dadurch gekennzeichnet,* dass** die Länge der zweiten Spannut (110) l2 0,8 l1 ≤ l2 ≤ 1,2 l1 beträgt, wobei l1 die Länge der ersten Spannut (108) ist.

9. Metallschneidender Bohreinsatz nach einem der vorhergehenden Ansprüche, ***dadurch gekennzeichnet,* dass** die zweite Spanleitnut beim Montieren des metallschneidenden Bohreinsatzes in ein Bohrwerkzeug (500) als radial umlaufende Nut ausgebildet ist.

10. Metallschneidendes Bohrwerkzeug (500), das Folgendes aufweist:
einen langgestreckten Bohrkörper (501) mit einem Bohrschaft (502) und einem Aufnahmeschaft (503); und
***dadurch gekennzeichnet,* dass** es ferner wenigstens einen Bohreinsatz (100) nach einem der vorhergehenden Ansprüche aufweist, der an einem Ende des Bohrschafts (502) angebracht ist.

## Revendications

1. Plaquette de foret pour découpe de métaux (100) destinée à un outil de perçage (500), comprenant :
une surface supérieure (101) et une surface inférieure (102) opposées avec un axe de symétrie de la plaquette de foret de coupe s'étendant entre celles-ci, et une surface latérale périphérique (103) s'étend entre ladite surface supérieure et ladite surface inférieure, où la surface supérieure comprend une face d'attaque (104) et la surface latérale (103) comprend une face de dépouille (105) ;
au moins une arête de coupe (106) est formée à une intersection de la face d'attaque (104) de la surface supérieure (101) et d'une face de dépouille contiguë (105) de la surface latérale (103),
au moins un élément brise-copeaux (106) est formé dans la face d'attaque (104) de manière adjacente à et le long de l'arête de coupe (106) ;
***caractérisée en* ce que**
le au moins un élément brise-copeaux (107) comprend :
une première rainure à copeaux (108) présentant une largeur constante (w1) et une profondeur constante (d1) par rapport à l'arête de coupe (106) ;
une seconde rainure à copeaux (110) présentant une largeur croissante, et une profondeur constante (d2) par rapport à l'arête de coupe (106) ;
une rainure à copeaux de transition (109) qui relie la première rainure à copeaux (108) et la seconde rainure à copeaux (110) ;
où la seconde rainure (110) dans une première extrémité adjacente à la rainure de transition (109) présente une première largeur w21 et dans une seconde extrémité présente une seconde largeur w22, où la seconde largeur w22 est supérieure à la première largeur w21.

2. Plaquette de foret pour découpe de métaux selon la revendication 1, ***caractérisée en* ce que** la profondeur constante (d1) de la première rainure à copeaux (108) est égale à la profondeur constante d2 de la seconde rainure à copeaux (110).

3. Plaquette de foret pour découpe de métaux selon la revendication 2, ***caractérisée en* ce que** l'arête de coupe (106) est une arête rectiligne selon une vue de côté orientée vers la face de dépouille (105) et l'arête de coupe (106) est une arête rectiligne selon une vue de dessus orientée vers la face d'attaque (104).

4. Plaquette de foret pour découpe de métaux selon l'une quelconque des revendications précédentes, ***caractérisée en* ce que** le au moins un élément brise-copeaux (107) comprend une plage (111) ayant une largeur constante wL qui s'étend le long de l'arête de coupe.

5. Plaquette de foret pour découpe de métaux selon la revendication 4, ***caractérisée en* ce que** la plage (111) présente un angle constant par rapport à la surface inférieure (102) de la plaquette de foret pour découpe de métaux (100).

6. Plaquette de foret pour découpe de métaux selon l'une quelconque des revendications précédentes, ***caractérisée en* ce que** la rainure à copeaux de transition (109) est une extension de la première rainure à copeaux (108), ou la rainure à copeaux de transition (109) est une extension de la seconde rainure à copeaux (110).

7. Plaquette de foret pour découpe de métaux selon l'une quelconque des revendications précédentes, ***caractérisée en* ce que** la longueur de la seconde rainure à copeaux (110) 12 est 0,5·l1 ≤ l2 ≤ 1,5·l1, où 11 est la longueur de la première rainure à copeaux (108).

8. Plaquette de foret pour découpe de métaux selon l'une quelconque des revendications précédentes, ***caractérisée en* ce que** la longueur de la seconde rainure à copeaux (110) 12 est 0,8·l1 ≤ l2 ≤ 1,2·l1, où 11 est la longueur de la première rainure à copeaux (108).

9. Plaquette de foret pour découpe de métaux selon l'une quelconque des revendications précédentes, ***caractérisée en* ce que** la seconde rainure à copeaux est configurée pour être une rainure radialement périphérique lors du montage de la plaquette de foret pour découpe de métaux dans un outil de perçage (500).

10. Outil de perçage pour découpe de métaux (500) comprenant :
un corps de foret allongé (501) présentant une tige d'alésage (502) et une queue de montage (503) ; et
***caractérisé en* ce qu'**il comprend en outre au moins une plaquette de foret (100) selon l'une quelconque des revendications précédentes, montée au niveau d'une extrémité de la tige d'alésage (502).
